# EUROPEAN PATENT SPECIFICATION

(11) **EP 4 668 267 B1**
(45) Date of publication and mention of the grant of the patent: **02.12.2026**
(21) Application number: 25183370.3
(22) Date of filing: 17.06.2025
(51) Int. Cl.: G11B 27/031, G06N 3/045, G06N 3/0475, G06N 3/096

(54) **CUSTOMIZED VIDEO GENERATION**
ERZEUGUNG VON PERSONALISIERTEM VIDEO
GÉNÉRATION DE VIDÉO PERSONNALISÉE

(30) Priority: 17.06.2024 US 202463660946 P
(43) Date of publication of application: 24.12.2025
(73) Proprietor: GOOGLE LLC, Mountain View CA 94043 (US)
(72) Inventor: CHEFER-LIVSHEN, Hila, 6789141 Tel Aviv (IL); ZADA, Shiran Elyahu, 6789141 Tel Aviv (IL); PAISS, Rony, 6789141 Tel Aviv (IL); EPHRAT, Ariel, 6789141 Tel Aviv (IL); TOV, Omer, 6789141 Tel Aviv (IL); RUBINSTEIN, Michael, Mountain View, 94043 (US); DEKEL, Tali, Mountain View, 94043 (US); MICHAELI, Tomer, 6789141 Tel Aviv (IL); MOSSERI, Inbar, 6789141 Tel Aviv (IL)
(74) Representative: Marks & Clerk GST

(56) References cited:
- CHEFER HILA ET AL: "Still-Moving: Customized Video Generation without Customized Video Data", ACM TRANSACTIONS ON GRAPHICS, ACM, NY, US, vol. 43, no. 6, 19 December 2024 (2024-12-19), pages 1 - 11, XP059552464, ISSN: 0730-0301, DOI: 10.1145/3687945
- BAR-TAL OMER ET AL: "Lumiere: A Space-Time Diffusion Model for Video Generation", 5 February 2024 (2024-02-05), pages 1 - 20, XP093327532, Retrieved from the Internet <URL:https://arxiv.org/pdf/2401.12945v2> [retrieved on 20251021]
- URIEL SINGER ET AL: "Video Editing via Factorized Diffusion Distillation", ARXIV.ORG, CORNELL UNIVERSITY LIBRARY, 201 OLIN LIBRARY CORNELL UNIVERSITY ITHACA, NY 14853, 14 March 2024 (2024-03-14), XP091699781
- YUWEI GUO ET AL: "AnimateDiff: Animate Your Personalized Text-to-Image Diffusion Models without Specific Tuning", ARXIV.ORG, CORNELL UNIVERSITY LIBRARY, 201 OLIN LIBRARY CORNELL UNIVERSITY ITHACA, NY 14853, 10 July 2023 (2023-07-10), XP091559878
- ZHANG YIMING ET AL: "PIA: Your Personalized Image Animator via Plug-and-Play Modules in Text-to-Image Models", 2024 IEEE/CVF CONFERENCE ON COMPUTER VISION AND PATTERN RECOGNITION (CVPR), IEEE, 16 June 2024 (2024-06-16), pages 7747 - 7756, XP034695006, DOI: 10.1109/CVPR52733.2024.00740

## Description

### FIELD

The present disclosure relates generally to generative machine learning models. More particularly, the present disclosure relates to approaches for creating a machine learning model capable of generating customized videos in settings where little to no custom video data is available for training.

### BACKGROUND

Recent advances in machine learning technology have resulted in the development of sophisticated video generation technologies capable of generating new video content. However, a significant technical challenge in this field is the generation of custom (e.g., personalized and/or stylized) videos when there is a scarcity of customized video data.

Traditional approaches to custom video generation have relied on voluminous datasets of custom video content that demonstrate the custom features. However, these extensive datasets are not always available or feasible to produce, especially for unique or personalized subjects and styles.

Other approaches have attempted to integrate customized text-to-image (T2I) models into text-to-video (T2V) frameworks. However, these approaches have typically resulted in inefficiencies and inaccuracies. For example, direct integration leads to a mismatch in feature distribution between the T2I and T2V models, which can degrade the quality of the generated videos and increase the computational load. This mismatch also complicates the training process, as the T2V model must learn to adapt to the new data characteristics introduced by the T2I model, often requiring extensive computational resources and processing time.

Thus, while customizing T2I models has seen tremendous progress recently, particularly in areas such as personalization, stylization, and conditional generation; expanding this progress to video generation is still in its infancy, primarily due to the lack of customized video data.

BAR-TAL OMER ET AL: "Lumiere: A Space-Time Diffusion Model for Video Generation",, 5 February 2024 (2024-02-05), pages 1-20, XP093327532,Retrieved from the Internet:URL:https:// arxiv.org/pdf/2401.12945v2 [retrieved on 2025-10-21] discloses a T2V diffusion model based on a Space-Time U-Net architecture. It builds on a pre-trained T2I model and introduces temporal down/upsampling and temporal processing so that the model generates the whole temporal duration of a video coherently, rather than relying on cascaded temporal super-resolution.

URIEL SINGER ET AL: "Video Editing via Factorized Diffusion Distillation",ARXIV.ORG, CORNELL UNIVERSITY LIBRARY, 201 OLIN LIBRARY CORNELL UNIVERSITY ITHACA, NY 14853, 14 March 2024 (2024-03-14), XP091699781, discloses Emu Video Edit (EVE), a video-editing model obtained by combining an image-editing adapter and a video-generation adapter on a shared frozen T2I backbone. The adapters are aligned by an unsupervised distillation procedure, Factorized Diffusion Distillation, to achieve frame-level editing and temporal consistency.

YUWEI GUO ET AL: "AnimateDiff: Animate Your Personalized Text-to-Image Diffusion Models without Specific Tuning",ARXIV.ORG, CORNELL UNIVERSITY LIBRARY, 201 OLIN LIBRARY CORNELL UNIVERSITY ITHACA, NY 14853, 10 July 2023 (2023-07-10), XP091559878, discloses adding a motion modelling module to a frozen T2I model and training this module on video clips to learn motion priors. Once trained, the motion module can be inserted into personalized T2I models derived from the same base model, without model-specific tuning, to generate animated outputs. This appears highly relevant to the claimed T2V/T2I weight-combination framework.

ZHANG YIMING ET AL: "PIA: Your Personalized Image Animator via Plug-and-Play Modules in Text-to-Image Models",2024 IEEE/CVF CONFERENCE ON COMPUTER VISION AND PATTERN RECOGNITION (CVPR), IEEE, 16 June 2024 (2024-06-16), pages 7747-7756, XP034695006,DOI: 10.1109/CVPR52733.2024.00740, discloses Personalized Image Animator (PIA), a framework for animating images generated by personalized T2I models. It uses a base T2I model with temporal alignment layers and a condition module receiving a condition frame and inter-frame affinity, so as to preserve image appearance while improving motion control by text.

### SUMMARY

A system of one or more computers can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

One general aspect includes a computer-implemented method to enable creation of customized video. The computer-implemented method includes obtaining, by a computing system which may include one or more computing devices, a text-to-video (T2V) model and a custom text-to-image (T2I) model, where the T2V model may include a set of base T2I weights and a set of T2V temporal weights, and where the custom T2I model may include a set of custom T2I weights. The method also includes modifying, by the computing system, the T2V model to include one or more motion adapter blocks to obtain a motion-adapted T2V model. The method also includes training, by the computing system, the motion-adapted T2V model using one or more natural motion-free videos, where training the motion-adapted T2V model using the one or more natural motion-free videos may include modifying one or more parameter values of the one or more motion adapter blocks. The method also includes modifying, by the computing system, the motion-adapted T2V model to obtain a motion-and-space-adapted T2V model, where modifying the motion-adapted T2V model may include: replacing, by the computing system, the set of base T2I weights with the set of custom T2I weights; and adding, by the computing system, one or more spatial adapter blocks. The method also includes training, by the computing system, the motion-and-space-adapted T2V model using one or more natural motion videos and one or more custom motion-free videos generated from image outputs generated by the custom T2I model. Other embodiments of this aspect include corresponding computer systems, apparatus, and computer programs recorded on one or more computer storage devices, each configured to perform the actions of the methods.

Implementations may include one or more of the following features. The computer-implemented method of any preceding claim, where the one or more motion adapter blocks may include low-rank adapters applied to the set of T2V temporal weights. The one or more motion adapter blocks are controllable with a hyperparameter alpha, where a positive non-zero value of alpha applies the one or more motion adapter blocks, and where a zero value of alpha cancels the one or more motion adapter blocks. Training, by the computing system, the motion-adapted T2V model using the one or more natural motion-free videos may include training, by the computing system, the motion-adapted T2V model using the one or more natural motion-free videos and with alpha set equal to the positive non-zero value. Training, by the computing system, the motion-and-space-adapted T2V model using the one or more natural motion videos and the one or more custom motion-free videos may include: training, by the computing system, the motion-and-space-adapted T2V model using the one or more natural motion videos and with alpha set equal to zero; and training, by the computing system, the motion-and-space-adapted T2V model using the one or more custom motion-free videos and with alpha set equal to the positive non-zero value. Training the motion-adapted T2V model using the one or more motion-free videos may include modifying one or more parameter values of the one or more motion adapter blocks while holding all other parameter values of the motion-adapted T2V model fixed. Training, by the computing system, the motion-and-space-adapted T2V model using the one or more natural motion videos and the one or more custom motion-free videos may include modifying one or more parameter values of the one or more spatial adapter blocks while holding all other parameter values. The method further may include: generating, by the computing system, the one or more natural motion-free videos, where generating, by the computing system, each of the one or more natural motion-free videos may include: randomly selecting, by the computing system, an image frame from one of the one or more natural motion videos; and duplicating, by the computing system, the image frame to generate one of the natural motion-free videos. The one or more spatial adapter blocks may include residual connections between the set of custom T2I weights and the set of T2V temporal weights. The method further may include: generating, by the computing system, the one or more custom motion-free videos, where generating, by the computing system, each of the one or more custom motion-free videos may include: performing, by the computing system, image generation with the custom T2I model to generate a custom image frame; and. duplicating, by the computing system, the custom image frame to generate one of the one or more custom motion-free videos. The T2V model has been generated by temporally-inflating a base pre-trained T2I model, and where the custom T2I model has been generated by fine-tuning the base pre-trained T2I model. The T2V model and the custom T2I model each may include denoising diffusion models.

Implementations of the described techniques may include hardware, a method or process, or computer software on a computer-accessible medium.

Another aspect is directed to one or more non-transitory computer-readable media that collectively store a custom text-to-video model that has been previously trained as described in the present disclosure. A computing system may include one or more processors and one or more non-transitory computer-readable media that collectively store: a custom text-to-video model that has been previously trained as described in the present disclosure; and computer-executable instructions for performing operations, the operations may include: receiving a text prompt; and processing the text prompt with the custom text-to-video model to generate a video output. The operations further may include: receiving a value for a hyperparameter alpha; and providing the value for the hyperparameter alpha as a control input for the custom text-to-video model. The value for the hyperparameter alpha may include a negative value.

Another general aspect includes a computer-implemented method to enable creation of customized video. The computer-implemented method includes obtaining, by a computing system may include one or more computing devices, a video generation model and a custom image generation model, where the video generation model may include a set of base image generation weights and a set of video generation temporal weights, and where the custom image generation model may include a set of custom image generation weights. The method also includes modifying, by the computing system, the video generation model to include one or more motion adapter blocks to obtain a motion-adapted video generation model. The method also includes training, by the computing system, the motion-adapted video generation model using one or more natural motion-free videos, where training the motion-adapted video generation model using the one or more natural motion-free videos may include modifying one or more parameter values of the one or more motion adapter blocks. The method also includes modifying, by the computing system the motion-adapted video generation model to obtain a motion-and-space-adapted video generation model, where modifying the motion-adapted video generation model may include: replacing, by the computing system, the set of base image generation weights with the set of custom image generation weights; and adding, by the computing system, one or more spatial adapter blocks. The method also includes training, by the computing system, the motion-and-space-adapted video generation model using one or more natural motion videos and one or more custom motion-free videos generated from image outputs generated by the custom image generation model. Other embodiments of this aspect include corresponding computer systems, apparatus, and computer programs recorded on one or more computer storage devices, each configured to perform the actions of the methods.

Implementations may include one or more of the following features. The one or more non-transitory computer-readable media where the one or more motion adapter blocks may include low-rank adapters applied to the set of video generation temporal weights. The one or more motion adapter blocks are controllable with a hyperparameter alpha, where a positive non-zero value of alpha applies the one or more motion adapter blocks, and where a zero value of alpha cancels the one or more motion adapter blocks. Training the motion-adapted video generation model using the one or more motion-free videos may include modifying one or more parameter values of the one or more motion adapter blocks while holding all other parameter values of the motion-adapted video generation model fixed. Training, by the computing system, the motion-and-space-adapted video generation model using the one or more natural motion videos and the one or more custom motion-free videos may include modifying one or more parameter values of the one or more spatial adapter blocks while holding all other parameter values fixed.

### BRIEF DESCRIPTION OF THE DRAWINGS

Detailed discussion of embodiments directed to one of ordinary skill in the art is set forth in the specification, which makes reference to the appended figures, in which:
Figure 1 depicts a block diagram of an example framework for training a custom video generation model according to example embodiments of the present disclosure.
Figure 2 depicts a flowchart diagram of an example method for training a custom video generation model according to example embodiments of the present disclosure.
Figure 3 depicts a graphical diagram of example use cases for a custom video generation model according to example embodiments of the present disclosure.
Figure 4A depicts a block diagram of an example computing system that performs custom video generation according to example embodiments of the present disclosure.
Figure 4B depicts a block diagram of an example computing device that performs custom video generation according to example embodiments of the present disclosure.
Figure 4C depicts a block diagram of an example computing device that performs custom video generation according to example embodiments of the present disclosure.

Reference numerals that are repeated across plural figures are intended to identify the same features in various implementations.

### DETAILED DESCRIPTION

### Overview

Example aspects of the present disclosure are directed to systems and methods for generating custom text-to-video (T2V) models starting from a custom text-to-image (T2I) model and without requiring customized video data. The proposed techniques can be particularly beneficial for applications where video data of a specific subject or style is not available. For example, the proposed approach can be used to create custom videos from a small set of custom still images or generate videos in a specific custom artistic style without having prior videos in that style.

In particular, the present disclosure provides a general framework for customizing a T2V model, without requiring any customized video data. The framework can be applied to the prominent T2V design where the video model is built over or generated from a T2I model. For example, the video model can be created by "inflating" a T2I model, which generally refers to a process in which temporal layers are added to a T2I model so that temporal dynamics between multiple frames of a video can be appropriately handled.

Thus, some example implementations assume access to a customized version of the T2I model, for example, which may have been trained only on still image data. For example, the custom T2I model can be created or have been created using DreamBooth (Ruiz et al., DreamBooth: Fine Tuning Text-to-Image Diffusion Models for Subject-Driven Generation, arXiv:2208.12242), StyleDrop (Sohn et al., StyleDrop: Text-to-Image Generation in Any Style, arXiv:2306.00983), or other T2I model customization approaches. The custom T2I model can generate novel image samples of the desired object or style.

However, naively plugging in the weights of the customized T2I model into the T2V model often leads to significant artifacts or insufficient adherence to the customization data. In particular, the weights of the customized T2I model often deviate from their counterparts within the inflated T2V model, which leads to a mismatch in feature distributions. Therefore, this approach can result in significant artifacts or low fidelity to the customization data

To overcome this issue, the present disclosure provides a generic framework for harnessing the generative 2D prior of the customized image model, while preserving the motion prior of a pre-trained T2V model. In particular, the framework can operate in two stages.

First, a set of motion adapter blocks can be added to the base T2V model and trained. For example, the motion adapter blocks can be lightweight residuals to the temporal attention layers that, when applied, cause the T2V model to generate static videos. According to an aspect of the present disclosure, during this first stage, the motion adapter blocks can be trained using motion-free videos (e.g., videos that do not contain motion). This enables the motion adapter blocks to learn to control (e.g., reduce or eliminate) motion within the generated video. Thus, after training, these motion adapters can be used as motion switches: they can be turned on to allow the training system to fine-tune the T2V model on frozen customized videos, and then turned off or removed to restore the model's motion prior.

Specifically, in a second stage, the custom T2I weights can be injected into the model and also one or more spatial adapter blocks can be added to the model. During the second stage, these spatial adapter blocks can be trained on both natural videos with motion and also custom motion-free videos. Specifically, the motion adapter blocks can be turned off and on, respectively, when training on the natural videos with motion and the custom motion-free videos. The custom motion-free videos can be created by duplicating a custom still image generated by the custom T2I model. In this manner, during the second stage, the spatial adapter blocks can learn to bridge the mismatch in feature distributions.

More particularly, in some implementations, the present disclosure can utilize a base T2V model and a custom T2I model. The base T2V model can include a set of base T2I weights and a set of T2V temporal weights. The custom T2I model can include a set of custom T2I weights. The proposed approach enables the integration of the custom T2I weights into the base T2V model while also resolving the mismatch in feature distributions between custom T2I weights and the T2V temporal weights.

In particular, a first training stage can include the insertion and training of motion adapter blocks within the T2V model. These blocks can be controlled to adjust the video output to either include or exclude motion. For instance, the motion adapters can be trained on motion-free videos, for example which may include "frozen videos" (e.g., a "video" generated by duplicating or repeating repeated images). The training of the motion adapter blocks using motion-free videos can enable the model to generate static content while also retaining the ability to generate dynamic video when needed (e.g., by preserving the motion prior of the video model).

A second training stage can include the modification of the T2V model to integrate the custom T2I weights and also include spatial adapter blocks. These spatial adapters help in aligning the feature distribution of the custom T2I model with the temporal dynamics of the T2V model, ensuring that the generated video maintains visual coherence. This can be especially important when the custom T2I model has been trained on highly stylized or unique content that differs significantly from typical video data.

In particular, training of the T2V model with the spatial adapters can be performed using both natural motion videos and custom motion-free videos. The latter can be generated by duplicating frames from custom images produced by the custom T2I model. This dual training approach allows the model to preserve the real video dynamics while also adapting to the visual features of the custom images, thus providing a balanced understanding of motion and image fidelity.

Another aspect of the present disclosure relates to the use of a hyperparameter alpha to control the activation of the motion adapter blocks. For example, setting alpha to a positive non-zero value (e.g., 1) activates the motion adapters, controlling the model to generate videos without motion, whereas setting alpha to zero deactivates the motion adapters, controlling the model to produce videos with natural motion (e.g., with an average amount of motion depicted in the natural video training set). Furthermore, this control can be further generalized to include negative values (e.g., -1) for the hyperparameter alpha, which can control the model to generate videos that depict an increased amount of motion (e.g., greater than an average amount of motion depicted in the natural video training set). This hyperparameter provides flexibility in controlling the output of the model based on the specific needs of the application.

At test or inference time, the motion adapter blocks can be removed from the model; but the trained spatial adapters can remain. This restores the motion prior of the T2V model while adhering to the spatial prior of the customized T2I model.

The proposed approach can be applied on or used to perform diverse tasks or use cases including personalized, stylized, and conditional video generation. In all of these use cases, the proposed techniques seamlessly integrate the spatial prior of the customized T2I model with a motion prior supplied by the T2V model.

The proposed framework is applicable to any video model that is built on top of a pre-trained T2I model. This generic applicability makes it a versatile tool in the field of video generation, capable of adapting to various underlying technologies and requirements. For instance, it can be implemented on top of different neural network architectures or integrated with other video generation technologies to enhance their customization capabilities.

The systems and methods of the present disclosure provide a number of technical effects and benefits. One example technical effect is the enhancement of video generation efficiency by utilizing a novel framework that integrates custom T2I models with T2V models without the need for customized video data. This integration significantly reduces the computational resources and time required to generate customized videos. By training the T2V model with motion adapter blocks on "frozen videos" and subsequently integrating spatial adapter blocks, the system can seamlessly generate dynamic video content from custom static images. This method is particularly beneficial in scenarios where collecting extensive customized video data is impractical or impossible, thus providing a substantial improvement in processing efficiency and resource utilization compared to traditional video generation techniques.

The proposed technique also significantly reduces the amount of computational resources used to train multiple custom video models. In particular, the proposed approach enables the efficient customization of a base, pre-trained generic video generation model to any number of different custom settings using any number of different custom T2I models. By enabling the reuse of the base video generation model for the different custom settings, the amount of overall training can be reduced (e.g., as compared to training each different custom video generation model from scratch). Reducing the amount of training reduces the consumption of computational resources such as processor usage, memory usage, etc.

Another significant technical effect achieved by the present disclosure is the ability to maintain high fidelity in the customization of video content. Through the use of spatial adapter blocks, the system effectively aligns the feature distribution of the custom T2I model with the temporal dynamics of the T2V model. This alignment ensures that the generated video accurately reflects the intended style or subject matter from the static images, with minimal loss of detail or introduction of artifacts.

The improved alignment between the feature distribution of the custom T2I model with the temporal layers of the T2V model also results in improved computational efficiency. In particular, in past approaches, this mismatch has complicated the training process, as the T2V model must learn to adapt to the new data characteristics introduced by the T2I model, often requiring extensive computational resources and processing time. The proposed use of spatial adapter blocks which learn from both natural videos and custom motion-free videos resolves this issue in an efficient manner, thereby reducing the amount of computational resources and processing time necessary to obtain a T2V model with the proper alignment.

Furthermore, the present disclosure provides enhanced flexibility and control in video generation through the use of a controllable hyperparameter, alpha, within the motion adapter blocks. This feature allows users to toggle the presence of motion in the generated videos, enabling the creation of both static and dynamic content based on the requirements of the use case. The ability to control video dynamics on-the-fly without additional training or modifications to the underlying model adds a layer of versatility and user control that is not commonly found in conventional video generation systems. This adaptability makes the disclosed method highly suitable for a wide range of applications, from entertainment and gaming to simulation training and beyond, where customization and control over video content are valuable.

An additional technical effect is the optimization of hardware utilization throughout different stages of the training and inference processes. By allowing the fine-tuning of the custom T2I model to be conducted separately from the pre-training of the base T2V model and the subsequent training of the modified T2V models, each stage can be executed on the most suitable hardware configuration. This separation ensures that each phase of model development can leverage the specific hardware that best meets its computational and memory demands. For example, the initial pre-training of the base T2V model, which may require significant computational power and memory for handling extensive data and complex model architectures, can be performed on high-performance computing systems. In parallel, the fine-tuning of the custom T2I model, which might require less computational intensity but greater precision for detail, can be optimized on hardware better suited for such tasks. Finally, the training of the modified T2V models with motion and spatial adapters can be tailored to hardware that efficiently supports the specific adaptations and adjustments needed for high fidelity video generation. This strategic allocation of hardware not only enhances the efficiency and speed of the training processes but also optimizes the effectiveness of the operations by aligning the hardware capabilities with the computational needs at each stage.

With reference now to the Figures, example embodiments of the present disclosure will be discussed in further detail.

### Example Customized Video Generation Techniques

Example techniques are disclosed for enabling a "plug-and-play" injection of customized weights from a customized (e.g., fine-tuned) T2I model M' into a video model V. The video model V can be an "inflated" model derived from a base T2I model M, from which the customized T2I model M' has also been fine-tuned. It has been observed that a naive approach of simply substituting the weights of M with M' in the video model V can lead to unsatisfactory results, potentially due to a shift in feature distribution caused by the switch of weights.

To mitigate this potential shift, embodiments of the disclosed technology involve training lightweight Spatial Adapters. Lightweight adapters can refer to adapters with a relatively small number of parameters and/or requiring a small number of optimization steps for training. These Spatial Adapters can be configured to project the activations at the outputs of the injected layers from the customized model M' back toward the distribution of the temporal layers of the video model V.

A challenge in this approach is that the adapters can ideally be trained on customized video data, which can be difficult or costly to obtain. While still images can be duplicated to form static or "frozen" videos, training on such frozen videos can lead to a degradation of motion generation abilities in the final model. To address this, the disclosed technology can employ Motion Adapters to enable training on image-based data without a substantial loss of the model's motion prior.

The following sections describe an example inflation approach and then detail two components of the disclosed method: Motion Adapters and Spatial Adapters.

### Example Preliminaries:

Example implementations of the disclosed techniques can operate within an "inflation" paradigm, where a T2V diffusion model V is an "inflated" variant of a T2I model M, which can be obtained by integrating temporal blocks between the spatial T2I blocks of the original model. A component of such inflated models can be temporal attention, which can be used to share information across frames of a video.

For example, for an input sequence denoted by $X ∈ {ℝ}^{F \times H \times W \times C}$, where F is the number of video frames, H and W are the spatial dimensions of the frames, and C is the channel dimension, temporal attention can operate as a vanilla self-attention block over the reshaped sequence $X ∈ {ℝ}^{H ⋅ W \times F \times C}$. First, the input sequence can be projected into queries, keys, and values using projection matrices *W_{Q}, W_{K}, W_{V}*, leading to: $Q ∈ {ℝ}^{H ⋅ W \times F \times {d}_{k}} , K ∈ {ℝ}^{H ⋅ W \times F \times {d}_{k}} , V ∈ {ℝ}^{H ⋅ W \times F \times {d}_{k}} ,$ where *dₖ* is the attention embedding dimension. Next, an attention matrix can be calculated as: $A = softmax \left(\frac{Q ⋅ {K}^{T}}{\sqrt{{d}_{k}}}\right) ,$ where $A ∈ {ℝ}^{H ⋅ W \times F \times F}$. Finally, the output of the block can be calculated as *Y* = *A* · *V.* In this mechanism, the temporal attention process can split the video into *H* · *W* temporal "needles," each of dimension F, and perform an attention operation for each needle. This can allow the model to share information across frames, which can be important in determining the motion in the resulting video. Therefore, the temporal attention blocks present a suitable location for placing the disclosed Motion Adapters.

### Example Motion Adapters:

Another component of the disclosed techniques can be the ability to train the weights of the video model V on frozen image data. To accomplish this without introducing out-of-distribution input, lightweight Motion Adapters can be trained to control the presence or absence of motion in the videos generated by the model. In some implementations, the Motion Adapters are trained once over the base, non-customized T2V model.

An example implementation can be based on a Low-Rank Adaptation (LoRA) (Hu et al., LoRA: Low-Rank Adaptation of Large Language Models, arXiv:2106.09685) of the temporal attention projection matrices, such as: ${W}^{˜} = W + α ⋅ {A}_{t}^{W , down} ⋅ {A}_{t}^{W , up}$

This adaptation can be applied for all *W* ∈ {*W_{Q}, W_{K}, W_{V}*}. In this example, α represents the adapter scale, while ${A}_{t}^{W , down} ∈ {ℝ}^{C \times r} , {A}_{t}^{W , up} ∈ {ℝ}^{r \times {d}_{k}}$ are the adapter matrices. The matrices ${A}_{t}^{W , down}$ can be initialized with random values, while ${A}_{t}^{W , up}$ can be initialized to zeros, such that before training, the model is equivalent to V.

During an example training process, the scale α can be set to 1. A small set of videos from the model's original training set can be used. For each video, a single frame can be randomly selected and duplicated F times to create a frozen video. The adapter layers can then be trained with a diffusion denoising objective. In this way, the Motion Adapters can be trained to generate frozen videos that depict a duplicated random frame from the video model's distribution.

Once trained, the Motion Adapters can enable the training of the video model weights on frozen data. By setting the scale α=0, for example, the model can retain its ability to generate motion. It has also been found that the Motion Adapters' ability to control the amount of motion can generalize to other scales, including negative scales. For instance, when setting α to a negative value (e.g., -1), the model can produce videos with an increased amount of motion. Therefore, in addition to enabling the customization of the T2V model on images, the Motion Adapters can also be used during inference to control the amount of motion in generated videos.

### Example Spatial Adapters:

An underlying aspect of the disclosed techniques is that a deviation in feature distribution between models can be corrected using a simple linear projection. Accordingly, some embodiments add Spatial Adapters after every injected customized T2I layer. These adapters can be configured to amend the distribution gap at the input to the temporal layers. Training these adapters can therefore involve propagating gradients through the entire video model.

In some implementations, the Spatial Adapters are implemented as a multiplication of low-rank matrices, for example: $Adapter \left(X\right) = X ⋅ \left(I+{A}_{s}^{down}⋅{A}_{s}^{up}\right) ,$ where ${A}_{s}^{down} ∈ {ℝ}^{C \times r} , {A}_{s}^{up} ∈ {ℝ}^{r \times C}$ are layer-specific low-rank adapter matrices. Similar to the Motion Adapters, the ${A}_{s}^{down}$ matrices can be initialized randomly and the ${A}_{s}^{up}$ matrices can be initialized with zeros, such that before training, the adapted model is equivalent to V.

The Spatial Adapters can be trained with a diffusion reconstruction loss using a combination of images and videos. Specifically, an example training process can use images generated by the customized T2I model M', along with a number of non-customized videos (for example, 40 videos) to preserve the motion prior of the inflated model. In some implementations of such a process, the Motion Adapters can be employed with a scale of *α* = 1 for the frozen videos (generated from the customized images) and a scale of *α* = 0 for the prior preservation videos.

### Example Training Framework Visualization

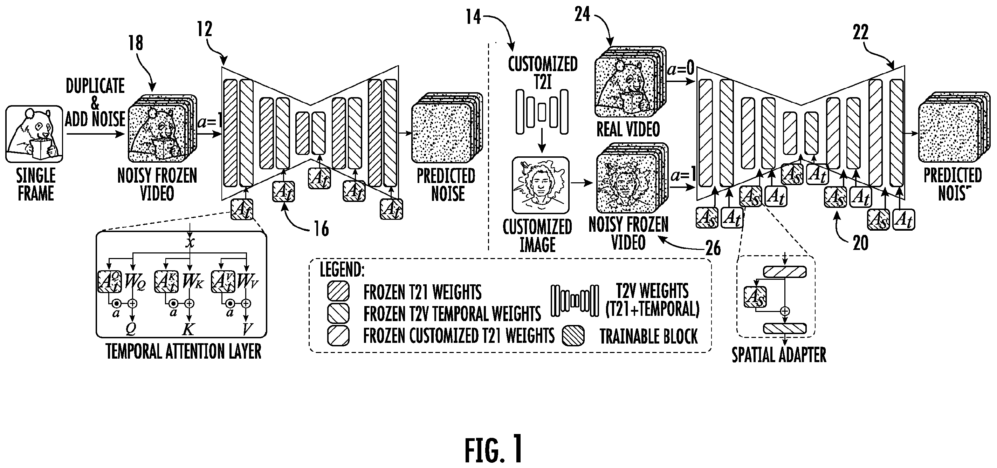

Referring now to Figure 1, a block diagram illustrates an example process and system components that can be involved in training a custom video generation model. Figure 1 illustrates the interaction between a text-to-video (T2V) model 12 and a custom text-to-image (T2I) model 14, along with the integration of motion adapter blocks 16 and/or spatial adapter blocks 20.

In some implementations, the system can provide a framework for adapting a pre-existing T2V model to generate video content that incorporates novel subjects and/or styles defined by the custom T2I model 14, without requiring corresponding custom video training data. For instance, the T2V model 12 can be a U-Net-based diffusion model architecture, where temporal attention layers are interleaved with spatial convolution and/or spatial attention layers to process video data. To illustrate, the custom T2I model 14 can be a fine-tuned version of a base T2I model, such as a Stable Diffusion or Imagen model, which has been trained on a limited set of user-provided images using methods like DreamBooth and/or StyleDrop to learn a specific concept or style.

In some implementations, the T2V model 12 can initially incorporate a set of base T2I weights and a set of T2V temporal weights. In a first stage, the T2V model 12 can be modified by including one or more motion adapter blocks 16. These blocks can be configured to adjust the video output to include and/or exclude motion, depending on the training stage and the desired output. In some implementations, the motion adapter blocks 16 can be lightweight residuals to the temporal attention layers, as depicted in the detailed view within Figure 1.

These layers can adjust temporal dynamics based on input from motion-free videos 18, which can be generated, for example, by duplicating a single frame and adding noise to create a noisy frozen video. For instance, a motion adapter block 16 can be implemented as a low-rank decomposition.

In one embodiment, the training objective for the motion adapters can be a denoising diffusion loss, where the model is tasked with predicting the noise added to a noisy frozen video; gradients from this loss can then backpropagated to update only the parameters of the motion adapter blocks 16. For example, a motion-free video 18 can be created by taking a natural video, randomly selecting a single frame, duplicating that frame F times to match the model's expected frame count, and applying a sequence of noise values corresponding to diffusion timesteps.

In some implementations, the custom T2I model 14 can include a set of custom T2I weights. This model can generate customized static images, which can then be used to produce custom motion-free videos 26. These videos can be formed by duplicating a customized image and adding noise, thereby creating a noisy frozen video that is used in the training process.

In some implementations, the custom T2I weights can be derived from a process where a base T2I model is fine-tuned on a small collection of images (e.g., 3 to 10 images) that depict a particular subject or exemplify a specific artistic style. To illustrate, the custom T2I model 14 can receive a text prompt containing a unique identifier, such as "a photo of a [V*] cat," and can generate a static image that correctly depicts the custom cat concept associated with the [V*] token.

In one embodiment, the creation of custom motion-free videos 26 can involve generating one such custom image, duplicating it F times to form a sequence, and applying a distinct noise sample to each frame based on a given noise schedule for a specific diffusion timestep t. For example, this procedural generation of training data circumvents the need for actual video recordings of the custom subject. In another example, the noise added to each duplicated frame can be correlated to better simulate the noise structure of a static video within the diffusion framework, or it can be independent per frame to introduce minor variations.

In a second stage, the motion-adapted T2V model can be further modified to include one or more spatial adapter blocks 20, transitioning it into a motion-and-space-adapted T2V model 22. In some implementations, these spatial adapter blocks 20 can be trained to align the feature distribution between the custom T2I model and the T2V model. Their use may improve the likelihood that the generated video maintains visual coherence with the static images produced by the T2I model.

The spatial adapter blocks 20 can be trained using both natural motion videos 24 and/or the custom motion-free videos 26, which can allow the model to learn from real video dynamics while adapting to the visual features of the custom images. For instance, the spatial adapter blocks 20 can be implemented as 1x1 convolutional layers within a residual connection, inserted after each T2I layer block whose weights were replaced.

To illustrate the dual training process, a training batch can be constructed with a mixture of natural motion videos 24 and custom motion-free videos 26. When a sample of natural video is processed, the alpha hyperparameter for the motion adapter can be set to 0, deactivating it. Conversely, when a custom motion-free video is processed, alpha can be set to 1, activating the motion adapter to suppress motion generation.

In one embodiment, the training loss can be a standard diffusion denoising objective, but gradients can be computed and backpropagated only to update the parameters of the spatial adapter blocks 20, while all other model weights (e.g., including the injected T2I weights and the T2V temporal weights) remain frozen. This process trains the spatial adapters to learn a linear or non-linear projection that maps the feature activations from the custom T2I layers into a latent space that is compatible with the expectations of the pre-trained, frozen temporal layers of the T2V model.

Thus, Figure 1 provides an example framework for creating a custom video generation model that can integrate the capabilities of both T2I and/or T2V models, enhanced by the strategic use of motion and/or spatial adapters. The illustrated framework can enable the generation of customized video content with a reduced need for extensive custom video datasets. For instance, this approach can be viewed as a two-part solution where motion adapters 16 temporarily modify the model's temporal processing to allow for training on static data, and spatial adapters 20 create a permanent bridge to resolve the domain gap between the custom T2I component and the base T2V component.

To illustrate, in some cases during inference, the trained spatial adapter blocks 20 can remain active in the model, while the motion adapter blocks 16 can be deactivated (e.g., by setting their alpha scale to 0) or removed entirely from the model architecture. This configuration can restore the model's full capacity for generating motion while ensuring the output adheres to the customized visual features.

This adapter-based training can be computationally efficient, as it involves fine-tuning a small number of parameters relative to the total size of the model, thereby reducing the hardware requirements and/or training time compared to fine-tuning an entire T2V model. The framework's ability to use single custom images or small image sets as the basis for generating training data can also address a common bottleneck in video customization, as collecting and/or annotating extensive video data for every unique subject or style can be impractical.

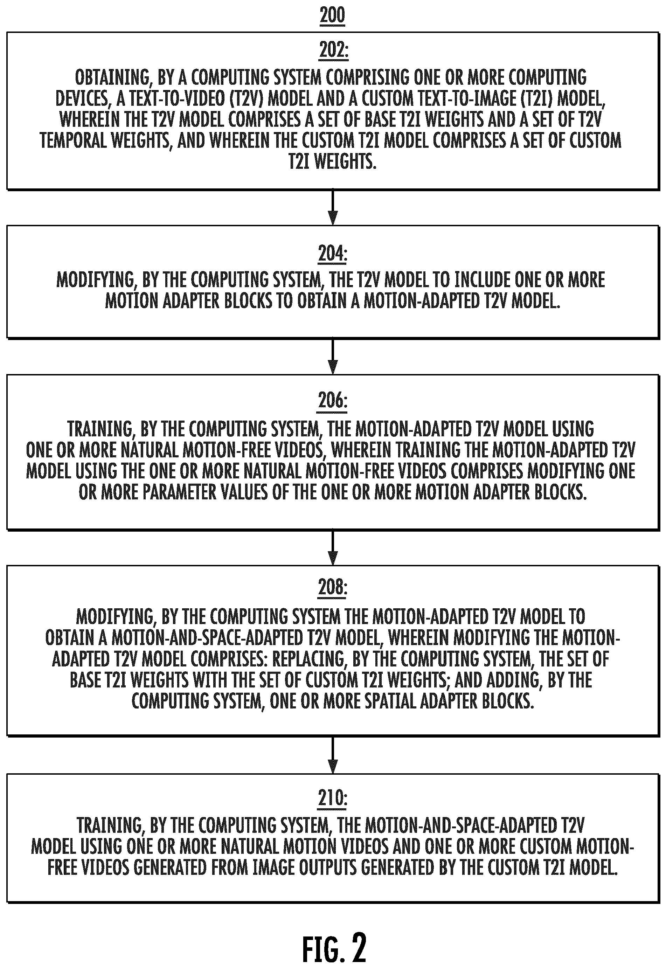

Referring now to Figure 2, a flowchart diagram illustrates an example method 200 for training a custom video generation model using a computing system that can include one or more computing devices. In some implementations, method 200 can be performed to generate a text-to-video (T2V) model with custom text-to-image (T2I) capabilities, including the integration of motion adapter blocks and/or spatial adapter blocks to enhance the model's ability to generate customized video content. For instance, the computing system can be a distributed cluster of machines equipped with specialized hardware accelerators such as Graphics Processing Units (GPUs) and/or Tensor Processing Units (TPUs), configured to execute the training operations in parallel.

At step 202, the process can begin with obtaining a T2V model and/or a custom T2I model by the computing system. In some implementations, the T2V model can include a set of base T2I weights and a set of T2V temporal weights, configured to handle the temporal dynamics of video content. The custom T2I model, on the other hand, can include a set of custom T2I weights, which can be tailored to generate images with specific styles and/or characteristics. For instance, the act of obtaining can include loading pre-trained model checkpoint files from a distributed file system or cloud storage into the memory of the computing system. To illustrate, the T2V model can be an existing model architecture, which was created by "inflating" a base T2I model, by inserting temporal processing layers. In one embodiment, the custom T2I model can be a version of the same base T2I model that has been fine-tuned on a small set of user-provided images using a parameter-efficient fine-tuning technique. For example, the base T2I weights can correspond to the parameters of the spatial layers (e.g., convolutional layers, spatial attention blocks) in the original T2I model, while the T2V temporal weights can correspond to the parameters of the temporal layers (e.g., temporal attention modules) added during the inflation process. The system can perform a check to confirm that the architecture of the custom T2I model's spatial layers is compatible with the base T2I weights of the T2V model to permit direct weight replacement.

Moving to step 204, the T2V model can be modified by the computing system to include one or more motion adapter blocks, resulting in a motion-adapted T2V model. In some implementations, these motion adapter blocks can be controllable to adjust the video output to selectively include and/or exclude motion, thereby providing control over the dynamic aspects of the video content. For instance, these blocks can be lightweight residuals added to the temporal attention layers of the T2V model, which can allow for fine-tuned control over motion characteristics in the generated video. To illustrate, the modification can be performed programmatically by traversing the neural network graph of the T2V model in memory and inserting a motion adapter block at each identified temporal attention layer. In one embodiment, a motion adapter block can be implemented using a low-rank adaptation (LoRA) technique.

At step 206, the motion-adapted T2V model can undergo a training process using one or more natural motion-free videos. This training can include modifying one or more parameter values of the motion adapter blocks. In some implementations, the use of motion-free videos can train the model to handle static scenes or images. For instance, this training stage can use an optimizer configured to update only the parameters of the low-rank matrices within the motion adapter blocks, while all other parameters of the T2V model can be held frozen (e.g., by setting their *requires*_*grad* attribute to false). To illustrate, a natural motion-free video can be generated on-the-fly by sampling a video clip from a large-scale video dataset, randomly selecting a single frame from that clip, and duplicating that frame a specified number of times to form a sequence. In one embodiment, the training loop can follow a standard diffusion model training procedure, where for each motion-free video sample, a noise level is chosen, noise is added to the video frames, and the model is tasked with predicting the added noise. The loss, for example a mean squared error between the predicted and actual noise, can then be calculated and backpropagated to update the motion adapter parameters.

Step 208 can involve further modifying the motion-adapted T2V model to obtain a motion-and-space-adapted T2V model. In some implementations, this step can include replacing the set of base T2I weights with the set of custom T2I weights and adding one or more spatial adapter blocks by the computing system. The spatial adapter blocks can be configured to align the feature distribution between the custom T2I model and the T2V model, which may improve the likelihood that the generated video maintains visual coherence with the static images produced by the T2I model. For instance, the weight replacement can be executed by programmatically iterating through the named parameters of the T2V model and substituting the weight tensors of spatial layers with the corresponding tensors loaded from the custom T2I model checkpoint. To illustrate, after a weight replacement for a given spatial block, a spatial adapter block can be inserted into the computational graph. In one embodiment, a spatial adapter can be a residual block containing one or more convolutional layers, such as a 1x1 convolution, and/or can be implemented using a parameter-efficient low-rank structure similar to the motion adapters.

Finally, at step 210, the motion-and-space-adapted T2V model can be trained using one or more natural motion videos and/or one or more custom motion-free videos generated from image outputs produced by the custom T2I model. In some implementations, this dual-data training approach can allow the model to learn from real video dynamics while also adapting to the visual features of the custom images. Training with both types of videos may improve the model's ability to generate dynamic content that reflects both the motion patterns observed in natural videos and/or the unique stylistic or thematic elements of the custom images. For instance, the training batch can be composed of a mix of natural videos and custom motion-free videos. To illustrate, during the training loop's forward pass, the alpha hyperparameter for the motion adapters can be conditionally set, for example as follows: alpha=0 for natural motion videos to preserve motion learning, and alpha=1 for custom motion-free videos to enable learning from static custom data. In one embodiment, the custom motion-free videos can be generated by using the custom T2I model to produce a single image from a text prompt, which is then replicated to form a video sequence. In this stage, the optimizer can be configured to update only the parameters of the spatial adapter blocks, while all other weights, including the injected custom T2I weights and the pre-trained motion adapters, can remain frozen.

Thus, method 200 of Figure 2 represents an example approach for creating a custom video generation model that can integrate the capabilities of both T2I and/or T2V models, enhanced by the strategic use of motion and/or spatial adapters. This method 200 can facilitate the generation of customized video content with a reduced need for extensive custom video datasets, addressing certain technical challenges in the field of video generation technology. For instance, the method is parameter-efficient because it only requires training the small sets of adapter parameters in each stage, rather than fine-tuning the entire T2V model. To illustrate, at inference time, the final model can be composed of the frozen T2V temporal weights, the injected custom T2I weights, and the trained spatial adapters. The motion adapters can be removed or deactivated (e.g., by setting alpha=0), which restores the model's learned motion priors, now applied to the custom visual concept. In one embodiment, this framework can be scaled to support multiple custom concepts by repeating only the second training stage (steps 208 and 210) for each new custom T2I model, while reusing the same base T2V model and the universally trained motion adapters.

### Example Use Cases

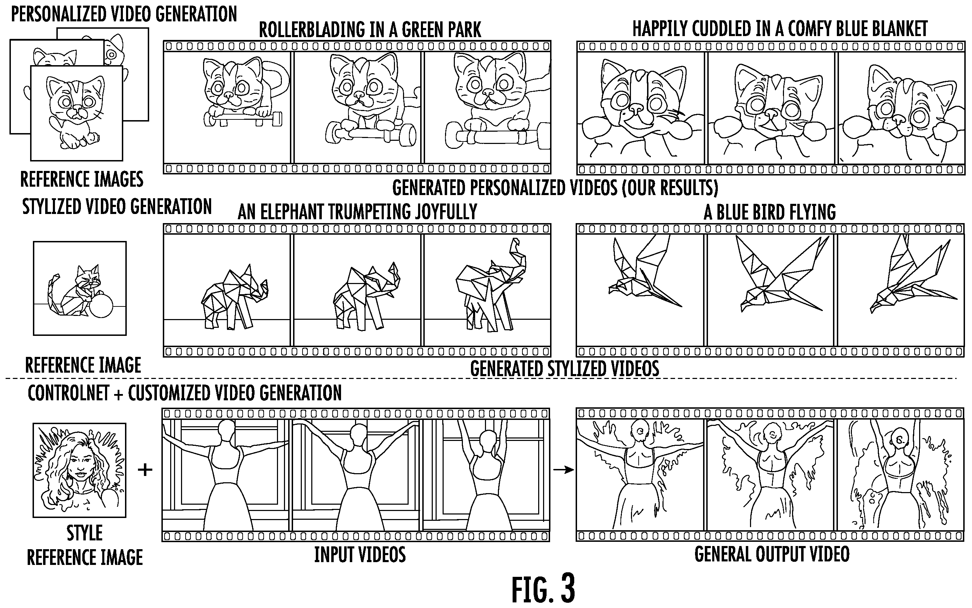

Referring now to Figure 3, Figure 3 provides graphical representations illustrating various applications and outcomes of the disclosed custom video generation model. This figure demonstrates the versatility and effectiveness of the model across different styles and customization parameters.

The top section of Figure 3 showcases "Personalized Video Generation," where reference images of a unique character are used to generate personalized videos depicting the character in various scenarios. This section highlights the model's ability to maintain the distinctive features and style of a reference character across different video frames and contexts while also leveraging the preserved motion prior.

The middle section of Figure 3 displays "Stylized Video Generation," where a different artistic approach is taken. Here, a reference image of an origami figure is used to generate videos where different figures described by textual inputs appear to be moving, but are depicted in the origami style represented by the reference image. This part of the figure emphasizes the model's capacity to transfer artistic styles to novel dynamic content.

The bottom section of Figure 3, labeled "ControlNet + Customized Video Generation," demonstrates another integration where a style reference image is combined with an input video to produce a stylized output video. The transformation from a standard video of a person performing ballet to a vibrant, color-splashed artistic video represents the model's capability to fuse real-world video input with a style reference image.

### Example Devices and Systems

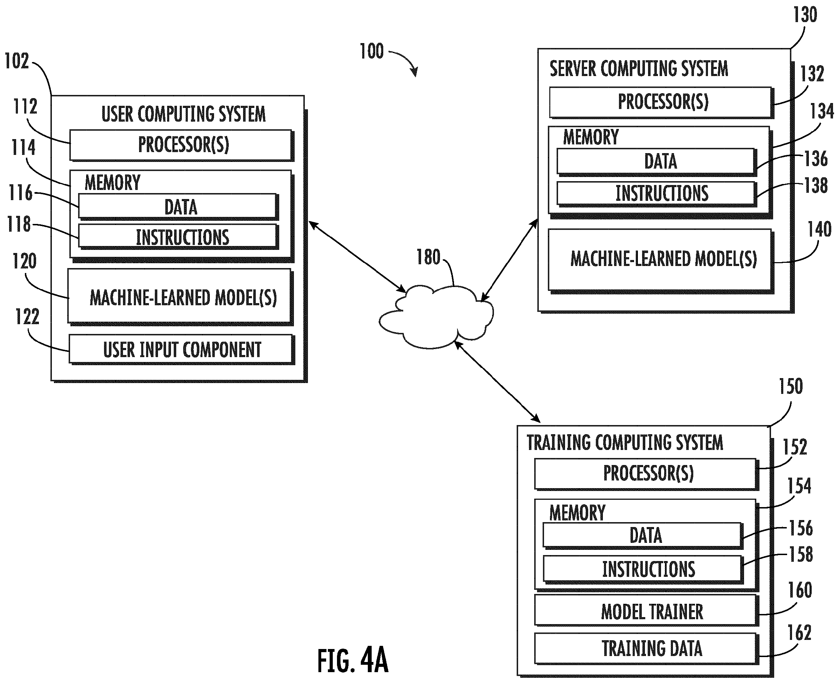

Figure 4A depicts a block diagram of an example computing system 100 that performs custom video generation according to example embodiments of the present disclosure. The system 100 includes a user computing device 102, a server computing system 130, and a training computing system 150 that are communicatively coupled over a network 180.

The user computing device 102 can be any type of computing device, such as, for example, a personal computing device (e.g., laptop or desktop), a mobile computing device (e.g., smartphone or tablet), a gaming console or controller, a wearable computing device, an embedded computing device, or any other type of computing device.

The user computing device 102 includes one or more processors 112 and a memory 114. The one or more processors 112 can be any suitable processing device (e.g., a processor core, a microprocessor, an ASIC, an FPGA, a controller, a microcontroller, etc.) and can be one processor or a plurality of processors that are operatively connected. The memory 114 can include one or more non-transitory computer-readable storage media, such as RAM, ROM, EEPROM, EPROM, flash memory devices, magnetic disks, etc., and combinations thereof. The memory 114 can store data 116 and instructions 118 which are executed by the processor 112 to cause the user computing device 102 to perform operations.

In some implementations, the user computing device 102 can store or include one or more machine-learned models 120. For example, the machine-learned models 120 can be or can otherwise include various machine-learned models such as neural networks (e.g., deep neural networks) or other types of machine-learned models, including non-linear models and/or linear models. Neural networks can include feed-forward neural networks, recurrent neural networks (e.g., long short-term memory recurrent neural networks), convolutional neural networks or other forms of neural networks. Some example machine-learned models can leverage an attention mechanism such as self-attention. For example, some example machine-learned models can include multi-headed self-attention models (e.g., transformer models). Example machine-learned models 120 are discussed with reference to Figures 1-2.

In some implementations, the one or more machine-learned models 120 can be received from the server computing system 130 over network 180, stored in the user computing device memory 114, and then used or otherwise implemented by the one or more processors 112. In some implementations, the user computing device 102 can implement multiple parallel instances of a single machine-learned model 120 (e.g., to perform parallel video generation across multiple instances of conditioning inputs).

Additionally or alternatively, one or more machine-learned models 140 can be included in or otherwise stored and implemented by the server computing system 130 that communicates with the user computing device 102 according to a client-server relationship. For example, the machine-learned models 140 can be implemented by the server computing system 140 as a portion of a web service (e.g., a video generation service). Thus, one or more models 120 can be stored and implemented at the user computing device 102 and/or one or more models 140 can be stored and implemented at the server computing system 130.

The user computing device 102 can also include one or more user input components 122 that receives user input. For example, the user input component 122 can be a touch-sensitive component (e.g., a touch-sensitive display screen or a touch pad) that is sensitive to the touch of a user input object (e.g., a finger or a stylus). The touch-sensitive component can serve to implement a virtual keyboard. Other example user input components include a microphone, a traditional keyboard, or other means by which a user can provide user input.

The server computing system 130 includes one or more processors 132 and a memory 134. The one or more processors 132 can be any suitable processing device (e.g., a processor core, a microprocessor, an ASIC, an FPGA, a controller, a microcontroller, etc.) and can be one processor or a plurality of processors that are operatively connected. The memory 134 can include one or more non-transitory computer-readable storage media, such as RAM, ROM, EEPROM, EPROM, flash memory devices, magnetic disks, etc., and combinations thereof. The memory 134 can store data 136 and instructions 138 which are executed by the processor 132 to cause the server computing system 130 to perform operations.

In some implementations, the server computing system 130 includes or is otherwise implemented by one or more server computing devices. In instances in which the server computing system 130 includes plural server computing devices, such server computing devices can operate according to sequential computing architectures, parallel computing architectures, or some combination thereof.

As described above, the server computing system 130 can store or otherwise include one or more machine-learned models 140. For example, the models 140 can be or can otherwise include various machine-learned models. Example machine-learned models include neural networks or other multi-layer non-linear models. Example neural networks include feed forward neural networks, deep neural networks, recurrent neural networks, and convolutional neural networks. Some example machine-learned models can leverage an attention mechanism such as self-attention. For example, some example machine-learned models can include multi-headed self-attention models (e.g., transformer models). Example models 140 are discussed with reference to Figures 1-2.

The user computing device 102 and/or the server computing system 130 can train the models 120 and/or 140 via interaction with the training computing system 150 that is communicatively coupled over the network 180. The training computing system 150 can be separate from the server computing system 130 or can be a portion of the server computing system 130.

The training computing system 150 includes one or more processors 152 and a memory 154. The one or more processors 152 can be any suitable processing device (e.g., a processor core, a microprocessor, an ASIC, an FPGA, a controller, a microcontroller, etc.) and can be one processor or a plurality of processors that are operatively connected. The memory 154 can include one or more non-transitory computer-readable storage media, such as RAM, ROM, EEPROM, EPROM, flash memory devices, magnetic disks, etc., and combinations thereof. The memory 154 can store data 156 and instructions 158 which are executed by the processor 152 to cause the training computing system 150 to perform operations. In some implementations, the training computing system 150 includes or is otherwise implemented by one or more server computing devices.

The training computing system 150 can include a model trainer 160 that trains the machine-learned models 120 and/or 140 stored at the user computing device 102 and/or the server computing system 130 using various training or learning techniques, such as, for example, backwards propagation of errors. For example, a loss function can be backpropagated through the model(s) to update one or more parameters of the model(s) (e.g., based on a gradient of the loss function). Various loss functions can be used such as mean squared error, likelihood loss, cross entropy loss, hinge loss, and/or various other loss functions. Gradient descent techniques can be used to iteratively update the parameters over a number of training iterations.

In some implementations, performing backwards propagation of errors can include performing truncated backpropagation through time. The model trainer 160 can perform a number of generalization techniques (e.g., weight decays, dropouts, etc.) to improve the generalization capability of the models being trained.

In particular, the model trainer 160 can train the machine-learned models 120 and/or 140 based on a set of training data 162. The training data 162 can include, for example, a plurality of natural videos and a plurality of custom still images.

In some implementations, if the user has provided consent, the training examples can be provided by the user computing device 102. Thus, in such implementations, the model 120 provided to the user computing device 102 can be trained by the training computing system 150 on user-specific data received from the user computing device 102. In some instances, this process can be referred to as personalizing the model.

The model trainer 160 includes computer logic utilized to provide desired functionality. The model trainer 160 can be implemented in hardware, firmware, and/or software controlling a general purpose processor. For example, in some implementations, the model trainer 160 includes program files stored on a storage device, loaded into a memory and executed by one or more processors. In other implementations, the model trainer 160 includes one or more sets of computer-executable instructions that are stored in a tangible computer-readable storage medium such as RAM, hard disk, or optical or magnetic media.

The network 180 can be any type of communications network, such as a local area network (e.g., intranet), wide area network (e.g., Internet), or some combination thereof and can include any number of wired or wireless links. In general, communication over the network 180 can be carried via any type of wired and/or wireless connection, using a wide variety of communication protocols (e.g., TCP/IP, HTTP, SMTP, FTP), encodings or formats (e.g., HTML, XML), and/or protection schemes (e.g., VPN, secure HTTP, SSL).

One example type of machine learning model (e.g., model 120 and/or 140) is a denoising diffusion model (or "diffusion model"). A denoising diffusion model can be defined as a type of generative model that learns to progressively remove noise from a set of input data to generate new data samples. A comprehensive discussion of diffusion models is provided by Yang L., Zhang Z., Song Y., Hong S., Xu R., Zhao Y., Zhang W., Cui B., and Yang M., Diffusion Models: A Comprehensive Survey of Methods and Applications, arXiv:2209.00796 [cs.LG]. *See also,* Sohl-Dickstein, J., Weiss, E., Maheswaranathan, N., & Ganguli, S. (2015). Deep Unsupervised Learning using Nonequilibrium Thermodynamics. In International Conference on Machine Learning (ICML); Song, Y., & Ermon, S. (2019). Generative Modeling by Estimating Gradients of the Data Distribution. In Advances in Neural Information Processing Systems (NeurIPS); Ho, J., Jain, A., & Abbeel, P. (2020). Denoising Diffusion Probabilistic Models. In Advances in Neural Information Processing Systems (NeurIPS); and Song, Y., Sohl-Dickstein, J., Kingma, D. P., Kumar, A., Ermon, S., & Poole, B. (2020). Score-Based Generative Modeling through Stochastic Differential Equations. In International Conference on Learning Representations (ICLR)*.*

More particularly, in some implementations, the diffusion process of a denoising diffusion model can include both forward and reverse diffusion phases. The forward diffusion phase can include gradually adding noise (e.g., Gaussian noise) to data over a series of time steps. This transformation can lead to the data eventually resembling pure noise. For example, in the context of image processing, an initially clear image can incrementally receive noise until it is indistinguishable from random noise. In some implementations, this step-by-step addition of noise can be parameterized by a variance schedule that controls the noise level at each step.

Conversely, the reverse diffusion phase can include systematically removing the noise added during the forward diffusion to reconstruct the original data sample or to generate new data samples. This phase can use a trained neural network model to predict the noise that was added (or conversely, that should be removed) at each step and subtract it from the noisy data. For instance, starting from a purely noisy image, the model can iteratively denoise the image, progressively restoring details until a clear image is obtained.

This process of reverse diffusion can be guided by learning from a set of training data, where the model learns the optimal way to remove noise and recover data. The ability to reverse the noise addition effectively allows the generation of new data samples that are similar to the training data and/or modified according to specified conditions. In particular, in the learned reverse diffusion process, the diffusion model can be used to generate new samples that can either replicate the original or produce variations based on the learned data distribution.

In some implementations, denoising diffusion models can operate in either pixel space or latent space, each offering distinct advantages depending on the application requirements. Operating in pixel space means that the model directly manipulates and generates data in its original form, such as raw pixel values for images. For example, when generating images, the diffusion process can add or remove noise directly at the pixel level, allowing the model to learn and reproduce fine-grained details that are visible in the pixel data.

Alternatively, operating in latent space can include transforming the data into a compressed, abstract representation before applying the diffusion process. This can be beneficial for handling high-dimensional data or for improving the computational efficiency of the model. For instance, an image can be encoded into a lower-dimensional latent representation using an encoder network, and the diffusion process can then be applied in this latent space. The denoised latent representation can subsequently be decoded back into pixel space to produce the final output image. This approach can reduce the computational load during the training and sampling phases and can sometimes help in capturing higher-level abstract features of the data that are not immediately apparent in the pixel space.

In some implementations, denoising diffusion models can utilize probability distributions to manage the transformation of data throughout the diffusion process. As one example, Gaussian distributions can be employed in the forward diffusion phase, where noise added to the data is typically modeled as Gaussian. This method can be beneficial for applications like image processing or audio synthesis, where the gradual addition of Gaussian noise helps in creating a smooth transition from original data to a noise-dominated state. However, the model can also be designed to use other types of noise distributions as part of its stochastic process.

In the reverse phase, learned transition distributions can guide the denoising steps. Specifically, a parameterized model (e.g., neural network) can be used to predict the noise to be removed at each step of the reverse phase.

Model parameters can refer to parameter values within the denoising diffusion model that can be learned from training data to optimize the performance of the denoising diffusion model. These parameters can include weights of the neural networks used to predict noise in the reverse diffusion process, as well as parameters defining the noise schedule in the forward process.

The architecture of an example denoising diffusion model can include one or more neural networks. The neural networks can be trained to parameterize the transition kernels in the reverse Markov chain. As examples, the architecture of a denoising diffusion model can incorporate various types of neural networks, such as Convolutional Neural Networks (CNNs) or Recurrent Neural Networks (RNNs).

As a specific example, in some implementations, the neural network architecture can take the form of a U-Net. The U-Net architecture is characterized by its U-shaped structure, which includes a contracting path and an expansive path. The contracting path follows the typical architecture of a convolutional network, including repeated application of convolutions, followed by pooling operations that reduce the spatial dimensions of the feature maps. The expansive path of the U-Net, on the other hand, can include a series of up-convolutions and concatenations with high-resolution features from the contracting path. This can be achieved through skip connections that directly connect corresponding layers in the contracting path to layers in the expansive path.

More generally, the neural network architecture in denoising diffusion models can include multiple layers that can include various types of activation functions. These functions introduce non-linearities that enable the network to capture and learn complex data patterns effectively, although the specific choices of layers and activations can vary based on the model design and application requirements.

Additionally, the architecture can include special components like residual blocks and attention mechanisms, which can enhance the model's performance. Residual blocks can help in training deeper networks by allowing gradients to flow through the network more effectively. Attention mechanisms can provide a means for the model to focus on specific parts of the input data, which is advantageous for applications such as language translation or detailed image synthesis, where contextual understanding significantly impacts the quality of the output. These components are configurable and can be integrated into the neural network architecture to address specific challenges posed by the complexity of the data and the requirements of the generative task.

In some implementations, the training process of a denoising diffusion model can be oriented towards specific learning objectives. These objectives can include minimizing the difference between the original data and the data reconstructed after the reverse diffusion process. Specifically, in some implementations, an objective can include minimizing the Kullback-Leibler divergence between the joint distributions of the forward and reverse Markov chains to ensure that the reverse process effectively reconstructs or generates data that closely matches the training data. As another example, in image processing applications, the objective may be to minimize the pixel-wise mean squared error between the original and reconstructed images. Additionally, the model can be trained to optimize the likelihood of the data given the model, which can enhance the model's ability to generate new samples that are indistinguishable from real data.

Various strategies can be used to perform the training process for diffusion models. Gradient descent algorithms, such as stochastic gradient descent (SGD) or Adam, can be utilized to update the model's parameters. Moreover, learning rate schedules can be implemented to adjust the learning rate during training, which can help in stabilizing the training process and improving convergence. For instance, a learning rate that decreases gradually as training progresses can lead to more stable and reliable model performance.

Various loss functions can be used guide the training of denoising diffusion models. Example loss functions include the mean squared error (MSE) for regression tasks or cross-entropy loss for classification tasks within the model. Additionally, variational lower bounds, such as the evidence lower bound (ELBO), can be used to train the model under a variational inference framework. These loss functions can help in quantifying the discrepancy between the generated samples and the real data, guiding the model to produce outputs that closely resemble the target distribution.

In some implementations, temperature sampling in denoising diffusion models can be used to control the randomness of the generation process. By adjusting the temperature parameter, one can modify the variance of the noise used in the sampling steps, which can affect the sharpness and diversity of the generated outputs. For instance, a lower temperature can result in less noisy and more precise samples, whereas a higher temperature can increase sample diversity but may also introduce more noise and reduce sample quality.

In some implementations, conditional generation can allow the generation of data samples based on specific conditions or attributes. Conditional generation in denoising diffusion models can include modifying the reverse diffusion process based on additional inputs (e.g., conditioning inputs) such as class labels or text descriptions, which guide the model to generate data samples that are more likely to meet specific conditions. This can be implemented by conditioning the model on additional inputs such as class labels, text descriptions, or other data modalities. For example, in a model trained on a dataset of images and their corresponding captions, the model can generate images that correspond to a given textual description, enabling targeted image synthesis.

More particularly, denoising diffusion models can be conditioned using various types of data to guide the generation process towards specific outcomes. One common type of conditioning data is text. For example, in generating images from descriptions, the model can use textual inputs like "a sunny beach" or "a snowy mountain" to generate corresponding images. The text can be processed using natural language processing techniques to transform it into a format that the model can utilize effectively during the generation process.

For example, one type of conditioning data can include text embeddings. Text embeddings are vector representations of text that capture semantic meanings, which can be derived from pre-trained language models such as BERT or CLIP. These embeddings can provide a denser and potentially more informative representation of text than raw text inputs. For instance, in a diffusion model tasked with generating music based on mood descriptions, embeddings of words like "joyful" or "melancholic" can guide the audio generation process to produce music that reflects these moods.

Additionally, conditioning can also include using categorical labels or tags. This approach can be particularly useful in scenarios where the data needs to conform to specific categories or classes.

Classifier-free guidance is a technique that can enhance the control over the sample generation process without the need for an additional classifier model. This can be achieved by modifying the guidance scale during the reverse diffusion process, which adjusts the influence of the learned conditional model. For instance, by increasing the guidance scale, the model can produce samples that more closely align with the specified conditions, improving the fidelity of generated samples that meet desired criteria without the computational overhead of training and integrating a separate classifier.

In some implementations, denoising diffusion models can integrate with other generative models to form hybrid models. For instance, combining a denoising diffusion model with a Generative Adversarial Network (GAN) can leverage the strengths of both models, where the diffusion model can ensure diversity and coverage of the data distribution, and the GAN can refine the sharpness and realism of the generated samples. Another example can include integration with Variational Autoencoders (VAEs) to improve the latent space representation and stability of the generation process.

Efficiency improvements are beneficial aspects of denoising diffusion models. One way to achieve this is by reducing the number of diffusion steps required to generate high-quality samples. For example, sophisticated training techniques such as curriculum learning can be employed to gradually train the model on easier tasks (fewer diffusion steps) and increase complexity (more steps) as the model's performance improves. Additionally, architectural optimizations such as implementing more efficient neural network layers or utilizing advanced activation functions can decrease computational load and improve processing speed during both training and generation phases.

Noise scheduling strategies can improve the performance of denoising diffusion models. By carefully designing the noise schedule-the variance of noise added at each diffusion step-models can achieve faster convergence and improved sample quality. For example, using a learned noise schedule, where the model itself optimizes the noise levels during training based on the data, can result in more efficient training and potentially better generation quality compared to fixed, predetermined noise schedules.

In some implementations, learned upsampling in denoising diffusion models can facilitate the generation of high-resolution outputs from lower-resolution inputs. This technique can be particularly useful in applications such as high-definition image generation or detailed audio synthesis. Learned upsampling can include additional model components that are trained to increase the resolution of generated samples through the reverse diffusion process, effectively enhancing the detail and quality of outputs without the need for externally provided high-resolution training data. In some cases, these additional learned components can be referred to as "super-resolution" models.

In some implementations, denoising diffusion models can be applied to the field of image synthesis, where they can generate high-quality, photorealistic images from a distribution of training data. For example, example models can be used to create new images of landscapes, animals, or even fictional characters by learning from a dataset composed of similar images. The model can add noise to these images and then learn to reverse this process, effectively enabling the generation of new, unique images that maintain the characteristics of the original dataset.

Denoising diffusion models can also be utilized in audio generation. They can generate clear and coherent audio clips from noisy initial data or even from scratch. For instance, in the music industry, example models can help in creating new musical compositions by learning from various genres and styles. Similarly, in speech synthesis, denoising diffusion models can generate human-like speech from text inputs, which can be particularly beneficial for virtual assistants and other AI-driven communication tools.

Other potential use cases of denoising diffusion models extend across various fields including drug discovery, where example models can help in generating molecular structures that could lead to new pharmaceuticals. Additionally, in the field of autonomous vehicles, denoising diffusion models can be used to enhance the processing of sensor data, improving the vehicle's ability to interpret and react to its environment.

In some implementations, the performance of denoising diffusion models can be evaluated using various metrics that assess the quality and diversity of generated samples. The Inception Score (IS) is one such metric that can be used; it measures how distinguishable the generated classes are and the confidence of the classification. For example, a higher Inception Score indicates that the generated images are both diverse across classes and each image is distinctly recognized by a classifier as belonging to a specific class. Another commonly used metric is the Fréchet Inception Distance (FID), which assesses the similarity between the distribution of generated samples and real samples, based on features extracted by an Inception network. A lower FID indicates that the generated samples are more similar to the real samples, suggesting higher quality of the generated data.

Figure 4A illustrates one example computing system that can be used to implement the present disclosure. Other computing systems can be used as well. For example, in some implementations, the user computing device 102 can include the model trainer 160 and the training dataset 162. In such implementations, the models 120 can be both trained and used locally at the user computing device 102. In some of such implementations, the user computing device 102 can implement the model trainer 160 to personalize the models 120 based on user-specific data.

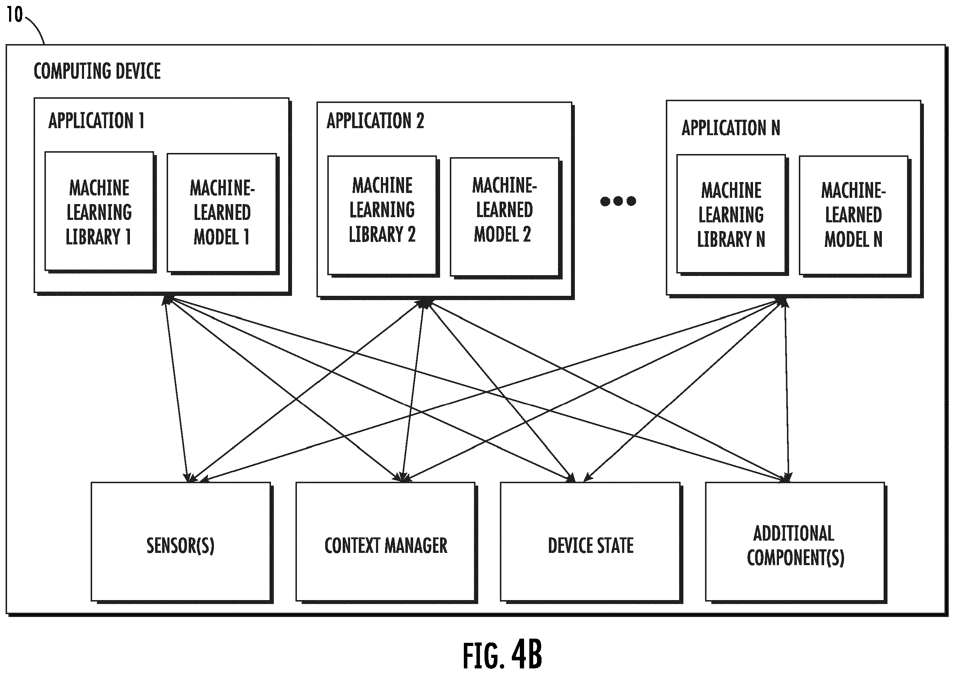

Figure 4B depicts a block diagram of an example computing device 10 that performs according to example embodiments of the present disclosure. The computing device 10 can be a user computing device or a server computing device.

The computing device 10 includes a number of applications (e.g., applications 1 through N). Each application contains its own machine learning library and machine-learned model(s). For example, each application can include a machine-learned model. Example applications include a text messaging application, an email application, a dictation application, a virtual keyboard application, a browser application, etc.

As illustrated in Figure 4B, each application can communicate with a number of other components of the computing device, such as, for example, one or more sensors, a context manager, a device state component, and/or additional components. In some implementations, each application can communicate with each device component using an API (e.g., a public API). In some implementations, the API used by each application is specific to that application.

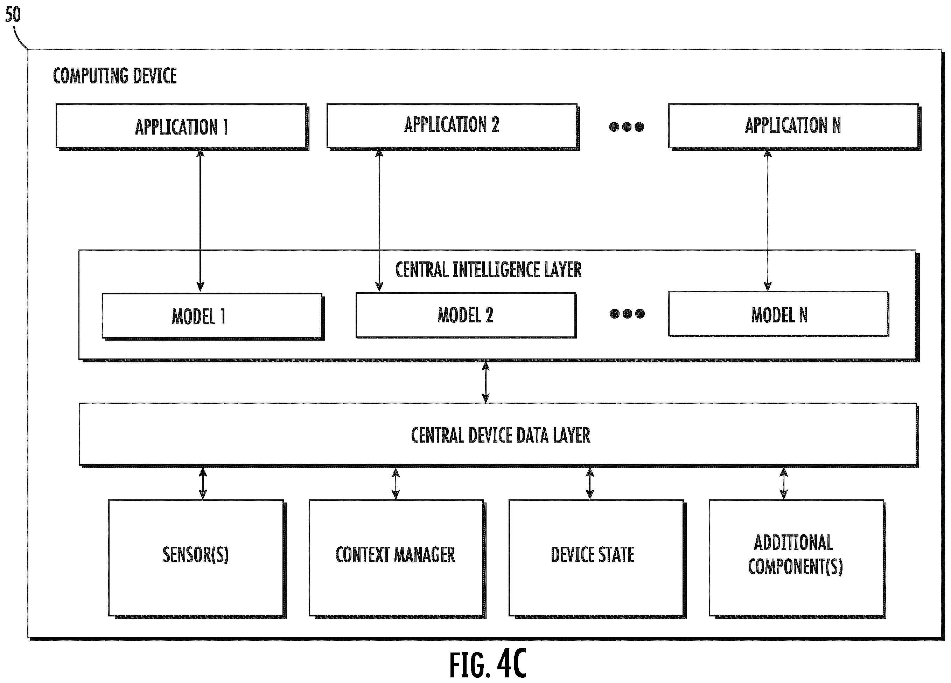

Figure 4C depicts a block diagram of an example computing device 50 that performs according to example embodiments of the present disclosure. The computing device 50 can be a user computing device or a server computing device.

The computing device 50 includes a number of applications (e.g., applications 1 through N). Each application is in communication with a central intelligence layer. Example applications include a text messaging application, an email application, a dictation application, a virtual keyboard application, a browser application, etc. In some implementations, each application can communicate with the central intelligence layer (and model(s) stored therein) using an API (e.g., a common API across all applications).

The central intelligence layer includes a number of machine-learned models. For example, as illustrated in Figure 4C, a respective machine-learned model can be provided for each application and managed by the central intelligence layer. In other implementations, two or more applications can share a single machine-learned model. For example, in some implementations, the central intelligence layer can provide a single model for all of the applications. In some implementations, the central intelligence layer is included within or otherwise implemented by an operating system of the computing device 50.

The central intelligence layer can communicate with a central device data layer. The central device data layer can be a centralized repository of data for the computing device 50. As illustrated in Figure 4C, the central device data layer can communicate with a number of other components of the computing device, such as, for example, one or more sensors, a context manager, a device state component, and/or additional components. In some implementations, the central device data layer can communicate with each device component using an API (e.g., a private API).

## Claims

1. A computer-implemented method to enable creation of customized video, the method comprising:
obtaining, by a computing system comprising one or more computing devices, a text-to-video (T2V) model and a custom text-to-image (T2I) model, wherein the T2V model comprises a set of base T2I weights and a set of T2V temporal weights, and wherein the custom T2I model comprises a set of custom T2I weights;
modifying, by the computing system, the T2V model to include one or more motion adapter blocks to obtain a motion-adapted T2V model; **characterized by** :
training, by the computing system, the motion-adapted T2V model using one or more natural motion-free videos, wherein training the motion-adapted T2V model using the one or more natural motion-free videos comprises modifying one or more parameter values of the one or more motion adapter blocks;
modifying, by the computing system the motion-adapted T2V model to obtain a motion-and-space-adapted T2V model, wherein modifying the motion-adapted T2V model comprises:
replacing, by the computing system, the set of base T2I weights with the set of custom T2I weights; and
adding, by the computing system, one or more spatial adapter blocks; and
training, by the computing system, the motion-and-space-adapted T2V model using one or more natural motion videos and one or more custom motion-free videos generated from image outputs generated by the custom T2I model.

2. The computer-implemented method of any preceding claim, wherein the one or more motion adapter blocks comprise low-rank adapters applied to the set of T2V temporal weights.

3. The computer-implemented method of any preceding claim, wherein the one or more motion adapter blocks are controllable with a hyperparameter alpha, wherein a positive non-zero value of alpha applies the one or more motion adapter blocks, and wherein a zero value of alpha cancels the one or more motion adapter blocks.

4. The computer-implemented method of claim 3, wherein training, by the computing system, the motion-adapted T2V model using the one or more natural motion-free videos comprises training, by the computing system, the motion-adapted T2V model using the one or more natural motion-free videos and with alpha set equal to the positive non-zero value.

5. The computer-implemented method of claim 3 or 4, wherein training, by the computing system, the motion-and-space-adapted T2V model using the one or more natural motion videos and the one or more custom motion-free videos comprises:
training, by the computing system, the motion-and-space-adapted T2V model using the one or more natural motion videos and with alpha set equal to zero; and
training, by the computing system, the motion-and-space-adapted T2V model using the one or more custom motion-free videos and with alpha set equal to the positive non-zero value.

6. The computer-implemented method of any preceding claim, wherein training the motion-adapted T2V model using the one or more motion-free videos comprises modifying one or more parameter values of the one or more motion adapter blocks while holding all other parameter values of the motion-adapted T2V model fixed.

7. The computer-implemented method of any preceding claim, wherein training, by the computing system, the motion-and-space-adapted T2V model using the one or more natural motion videos and the one or more custom motion-free videos comprises modifying one or more parameter values of the one or more spatial adapter blocks while holding all other parameter values fixed.

8. The computer-implemented method of any preceding claim, wherein the method further comprises:
generating, by the computing system, the one or more natural motion-free videos, wherein generating, by the computing system, each of the one or more natural motion-free videos comprises:
randomly selecting, by the computing system, an image frame from one of the one or more natural motion videos; and
duplicating, by the computing system, the image frame to generate one of the natural motion-free videos.

9. The computer-implemented method of any preceding claim, wherein the one or more spatial adapter blocks comprise residual connections between the set of custom T2I weights and the set of T2V temporal weights.

10. The computer-implemented method of any preceding claim, wherein the method further comprises:
generating, by the computing system, the one or more custom motion-free videos, wherein generating, by the computing system, each of the one or more custom motion-free videos comprises:
performing, by the computing system, image generation with the custom T2I model to generate a custom image frame; and.
duplicating, by the computing system, the custom image frame to generate one of the one or more custom motion-free videos.

11. The computer-implemented method of any preceding claim, wherein the T2V model has been generated by temporally-inflating a base pre-trained T2I model, and wherein the custom T2I model has been generated by fine-tuning the base pre-trained T2I model.

12. The computer-implemented method of any preceding claim, wherein the T2V model and the custom T2I model each comprise denoising diffusion models.

13. A computing system, comprising one or more processors and one or more non-transitory computer-readable media that collectively store:
a custom text-to-video (T2V) model that has been previously trained by performance of training operations, the training operations comprising:
obtaining a base T2V model and a custom text-to-image (T2I) model, wherein the base T2V model comprises a set of base T2I weights and a set of T2V temporal weights, and wherein the custom T2I model comprises a set of custom T2I weights;
modifying the base T2V model to include one or more motion adapter blocks to obtain a motion-adapted T2V model;
training the motion-adapted T2V model using one or more natural motion-free videos, wherein training the motion-adapted T2V model using the one or more natural motion-free videos comprises modifying one or more parameter values of the one or more motion adapter blocks;
modifying the motion-adapted T2V model to obtain a motion-and-space-adapted T2V model, wherein modifying the motion-adapted T2V model comprises:
replacing the set of base T2I weights with the set of custom T2I weights; and
adding one or more spatial adapter blocks; and
training the motion-and-space-adapted T2V model using one or more natural motion videos and one or more custom motion-free videos generated from image outputs generated by the custom T2I model, wherein training the motion-and-space-adapted T2V model results in the custom T2Vmodel; and
computer-executable instructions, which when executed by a computer, perform inference operations, the inference operations comprising:
receiving a text prompt; and
processing the text prompt with the custom T2Vmodel to generate a video output.

14. The computing system of claim 13, wherein the inference operations further comprise:
receiving a value for a hyperparameter alpha; and
providing the value for the hyperparameter alpha as a control input for the custom T2Vmodel.

15. The computing system of claim 14, wherein the value for the hyperparameter alpha comprises a negative value.

## Patentansprüche

1. Computerimplementiertes Verfahren zum Ermöglichen einer Erstellung von individualisiertem Video, wobei das Verfahren umfasst:
Erhalten, durch ein Rechensystem, das eine oder mehrere Rechenvorrichtungen umfasst, eines Text-zu-Video(T2V)-Modells und eines benutzerdefinierten Text-zu-Bild(T2I)-Modells, wobei das T2V-Modell einen Satz von T2I-Basisgewichten und einen Satz von temporalen T2V-Gewichten umfasst, und wobei das benutzerdefinierte T2I-Modell einen Satz von benutzerdefinierten T2I-Gewichten umfasst;
Modifizieren, durch das Rechensystem, des T2V-Modells, um einen oder mehrere Bewegungsadapterblöcke zu beinhalten, um ein bewegungsadaptiertes T2V-Modell zu erhalten; **gekennzeichnet durch**:
Trainieren, durch das Rechensystem, des bewegungsadaptierten T2V-Modells unter Verwendung eines oder mehrerer natürlicher bewegungsfreier Videos, wobei Trainieren des bewegungsadaptierten T2V-Modells unter Verwendung des einen oder der mehreren natürlichen bewegungsfreien Videos Modifizieren eines oder mehrerer Parameterwerte des einen oder der mehreren Bewegungsadapterblöcke umfasst;
Modifizieren, durch das Rechensystem, des bewegungsadaptierten T2V-Modells, um ein bewegungs- und raumadaptiertes T2V-Modell zu erhalten, wobei Modifizieren des bewegungsadaptierten T2V-Modells umfasst:
Ersetzen, durch das Rechensystem, des Satzes von T2I-Basisgewichten durch den Satz von benutzerdefinierten T2I-Gewichten; und
Hinzufügen, durch das Rechensystem, eines oder mehrerer Raumadapterblöcke; und
Trainieren, durch das Rechensystem, des bewegungs- und raumadaptierten T2V-Modells unter Verwendung eines oder mehrerer natürlicher Bewegungsvideos und eines oder mehrerer benutzerdefinierter bewegungsfreier Videos, die aus Bildausgaben erzeugt sind, die durch das benutzerdefinierte T2I-Modell erzeugt sind.

2. Computerimplementiertes Verfahren nach einem der vorhergehenden Ansprüche, wobei der eine oder die mehreren Bewegungsadapterblöcke Low-Rank-Adapter umfassen, die auf den Satz von temporalen T2V-Gewichten angewendet werden.

3. Computerimplementiertes Verfahren nach einem der vorhergehenden Ansprüche, wobei der eine oder die mehreren Bewegungsadapterblöcke mit einem Hyperparameter Alpha steuerbar sind, wobei ein positiver Wert ungleich null von Alpha den einen oder die mehreren Bewegungsadapterblöcke anwendet, und wobei ein Nullwert von Alpha den einen oder die mehreren Bewegungsadapterblöcke aufhebt.

4. Computerimplementiertes Verfahren nach Anspruch 3, wobei Trainieren, durch das Rechensystem, des bewegungsadaptierten T2V-Modells unter Verwendung des einen oder der mehreren natürlichen bewegungsfreien Videos Trainieren, durch das Rechensystem, des bewegungsadaptierten T2V-Modells unter Verwendung des einen oder der mehreren natürlichen bewegungsfreien Videos und mit auf den positiven Wert ungleich null gesetztem Alpha umfasst.

5. Computerimplementiertes Verfahren nach Anspruch 3 oder 4, wobei Trainieren, durch das Rechensystem, des bewegungs- und raumadaptierten T2V-Modells unter Verwendung des einen oder der mehreren natürlichen Bewegungsvideos und des einen oder der mehreren benutzerdefinierten bewegungsfreien Videos umfasst:
Trainieren, durch das Rechensystem, des bewegungs- und raumadaptierten T2V-Modells unter Verwendung des einen oder der mehreren natürlichen Bewegungsvideos und mit auf null gesetztem Alpha; und
Trainieren, durch das Rechensystem, des bewegungs- und raumadaptierten T2V-Modells unter Verwendung des einen oder der mehreren benutzerdefinierten bewegungsfreien Videos und mit auf den positiven Wert ungleich null gesetztem Alpha.

6. Computerimplementiertes Verfahren nach einem der vorhergehenden Ansprüche, wobei Trainieren des bewegungsadaptierten T2V-Modells unter Verwendung des einen oder der mehreren bewegungsfreien Videos Modifizieren eines oder mehrerer Parameterwerte des einen oder der mehreren Bewegungsadapterblöcke umfasst, während alle anderen Parameterwerte des bewegungsadaptierten T2V-Modells festgehalten werden.

7. Computerimplementiertes Verfahren nach einem der vorhergehenden Ansprüche, wobei Trainieren, durch das Rechensystem, des bewegungs- und raumadaptierten T2V-Modells unter Verwendung des einen oder der mehreren natürlichen Bewegungsvideos und des einen oder der mehreren benutzerdefinierten bewegungsfreien Videos Modifizieren eines oder mehrerer Parameterwerte des einen oder der mehreren Raumadapterblöcke umfasst, während alle anderen Parameterwerte festgehalten werden.

8. Computerimplementiertes Verfahren nach einem der vorhergehenden Ansprüche, wobei das Verfahren ferner umfasst: Erzeugen, durch das Rechensystem, des einen oder der mehreren natürlichen bewegungsfreien Videos, wobei Erzeugen, durch das Rechensystem, jedes der einen oder mehreren natürlichen bewegungsfreien Videos umfasst:
zufälliges Auswählen, durch das Rechensystem, eines Einzelbilds aus einem der einen oder mehreren natürlichen Bewegungsvideos; und
Duplizieren, durch das Rechensystem, des Einzelbilds, um eines der natürlichen bewegungsfreien Videos zu erzeugen.

9. Computerimplementiertes Verfahren nach einem der vorhergehenden Ansprüche, wobei der eine oder die mehreren Raumadapterblöcke Residualverbindungen zwischen dem Satz von benutzerdefinierten T2I-Gewichten und dem Satz von temporalen T2V-Gewichten umfassen.

10. Computerimplementiertes Verfahren nach einem der vorhergehenden Ansprüche, wobei das Verfahren ferner umfasst: Erzeugen, durch das Rechensystem, des einen oder der mehreren benutzerdefinierten bewegungsfreien Videos, wobei Erzeugen, durch das Rechensystem, jedes der einen oder mehreren benutzerdefinierten bewegungsfreien Videos umfasst:
Durchführen, durch das Rechensystem, von Bilderzeugung mit dem benutzerdefinierten T2I-Modell, um ein benutzerdefiniertes Einzelbild zu erzeugen; und
Duplizieren, durch das Rechensystem, des benutzerdefinierten Einzelbilds, um eines der einen oder mehreren benutzerdefinierten bewegungsfreien Videos zu erzeugen.

11. Computerimplementiertes Verfahren nach einem der vorhergehenden Ansprüche, wobei das T2V-Modell durch zeitliches Aufblähen eines vortrainierten T2I-Basismodells erzeugt worden ist, und wobei das benutzerdefinierte T2I-Modell durch Feinabstimmen des vortrainierten T2I-Basismodells erzeugt worden ist.

12. Computerimplementiertes Verfahren nach einem der vorhergehenden Ansprüche, wobei das T2V-Modell und das benutzerdefinierte T2I-Modell jeweils Entrauschungsdiffusionsmodelle umfassen.

13. Rechensystem, umfassend einen oder mehrere Prozessoren und ein oder mehrere nichtflüchtige computerlesbare Medien, die zusammen speichern:
ein benutzerdefiniertes Text-zu-Video(T2V)-Modell, das zuvor durch Durchführen von Trainingsoperationen trainiert worden ist, wobei die Trainingsoperationen umfassen:
Erhalten eines T2V-Basismodells und eines benutzerdefinierten Text-zu-Bild(T2I)-Modells, wobei das T2V-Basismodell einen Satz von T2I-Basisgewichten und einen Satz von temporalen T2V-Gewichten umfasst, und wobei das benutzerdefinierte T2I-Modell einen Satz von benutzerdefinierten T2I-Gewichten umfasst;
Modifizieren des T2V-Basismodells, um einen oder mehrere Bewegungsadapterblöcke zu beinhalten, um ein bewegungsadaptiertes T2V-Modell zu erhalten;
Trainieren des bewegungsadaptierten T2V-Modells unter Verwendung eines oder mehrerer natürlicher bewegungsfreier Videos, wobei Trainieren des bewegungsadaptierten T2V-Modells unter Verwendung des einen oder der mehreren natürlichen bewegungsfreien Videos Modifizieren eines oder mehrerer Parameterwerte des einen oder der mehreren Bewegungsadapterblöcke umfasst;
Modifizieren des bewegungsadaptierten T2V-Modells, um ein bewegungs- und raumadaptiertes T2V-Modell zu erhalten, wobei Modifizieren des bewegungsadaptierten T2V-Modells umfasst:
Ersetzen des Satzes von T2I-Basisgewichten durch den Satz von benutzerdefinierten T2I-Gewichten;
und
Hinzufügen eines oder mehrerer Raumadapterblöcke; und
Trainieren des bewegungs- und raumadaptierten T2V-Modells unter Verwendung eines oder mehrerer natürlicher Bewegungsvideos und eines oder mehrerer benutzerdefinierter bewegungsfreier Videos, die aus Bildausgaben erzeugt sind, die durch das benutzerdefinierte T2I-Modell erzeugt sind, wobei Trainieren des bewegungs- und raumadaptierten T2V-Modells zu dem benutzerdefinierten T2V-Modell führt; und
computerausführbare Anweisungen, die, wenn sie durch einen Computer ausgeführt werden, Inferenzoperationen durchführen, wobei die Inferenzoperationen umfassen:
Empfangen eines Textprompts; und
Verarbeiten des Textprompts mit dem benutzerdefinierten T2V-Modell, um eine Videoausgabe zu erzeugen.

14. Rechensystem nach Anspruch 13, wobei die Inferenzoperationen ferner umfassen:
Empfangen eines Werts für einen Hyperparameter Alpha; und
Bereitstellen des Werts für den Hyperparameter Alpha als eine Steuereingabe für das benutzerdefinierte T2V-Modell.

15. Rechensystem nach Anspruch 14, wobei der Wert für den Hyperparameter Alpha einen negativen Wert umfasst.

## Revendications

1. Procédé mis en œuvre par ordinateur pour permettre la création d'une vidéo personnalisée, le procédé comprenant :
l'obtention, par un système informatique comprenant un ou plusieurs dispositifs informatiques, d'un modèle texte-vidéo (T2V) et d'un modèle texte-image (T2I) personnalisé, dans lequel le modèle T2V comprend un ensemble de pondérations T2I de base et un ensemble de pondérations temporelles T2V, et dans lequel le modèle T2I personnalisé comprend un ensemble de pondérations T2I personnalisées ;
la modification, par le système informatique, du modèle T2V pour inclure un ou plusieurs blocs d'adaptation de mouvement afin d'obtenir un modèle T2V adapté au mouvement ; **caractérisé par** :
l'entraînement, par le système informatique, du modèle T2V adapté au mouvement à l'aide d'une ou de plusieurs vidéos naturelles sans mouvement, dans lequel l'entraînement du modèle T2V adapté au mouvement à l'aide de la ou des vidéos naturelles sans mouvement comprend la modification d'une ou de plusieurs valeurs de paramètres du ou des blocs d'adaptation de mouvement ;
la modification, par le système informatique, du modèle T2V adapté au mouvement pour obtenir un modèle T2V adapté au mouvement et à l'espace, dans lequel la modification du modèle T2V adapté au mouvement comprend :
le remplacement, par le système informatique, de l'ensemble de pondérations T2I de base par l'ensemble de pondérations T2I personnalisées ; et
l'ajout, par le système informatique, d'un ou de plusieurs blocs d'adaptation spatiale ; et
l'entraînement, par le système informatique, du modèle T2V adapté au mouvement et à l'espace à l'aide d'une ou de plusieurs vidéos de mouvement naturel et d'une ou de plusieurs vidéos personnalisées sans mouvement générées à partir de sorties d'images générées par le modèle T2I personnalisé.

2. Procédé mis en œuvre par ordinateur selon l'une quelconque revendication précédente, dans lequel le ou les blocs d'adaptation de mouvement comprennent des adaptateurs de faible rang appliqués à l'ensemble de pondérations temporelles T2V.

3. Procédé mis en œuvre par ordinateur selon l'une quelconque revendication précédente, dans lequel le ou les blocs d'adaptation de mouvement peuvent être commandés à l'aide d'un hyperparamètre alpha, dans lequel une valeur positive non nulle d'alpha applique le ou les blocs d'adaptation de mouvement, et dans lequel une valeur nulle d'alpha annule le ou les blocs d'adaptation de mouvement.

4. Procédé mis en œuvre par ordinateur selon la revendication 3, dans lequel l'entraînement, par le système informatique, du modèle T2V adapté au mouvement à l'aide de la ou des vidéos naturelles sans mouvement comprend l'entraînement, par le système informatique, du modèle T2V adapté au mouvement à l'aide de la ou des vidéos naturelles sans mouvement et avec alpha fixé à la valeur positive non nulle.

5. Procédé mis en œuvre par ordinateur selon la revendication 3 ou 4, dans lequel l'entraînement, par le système informatique, du modèle T2V adapté au mouvement et à l'espace à l'aide de la ou des vidéos de mouvement naturel et de la ou des vidéos personnalisées sans mouvement comprend :
l'entraînement, par le système informatique, du modèle T2V adapté au mouvement et à l'espace à l'aide de la ou des vidéos de mouvement naturel et avec alpha fixé à zéro ; et
l'entraînement, par le système informatique, du modèle T2V adapté au mouvement et à l'espace à l'aide de la ou des vidéos personnalisées sans mouvement et avec alpha fixé à la valeur positive non nulle.

6. Procédé mis en œuvre par ordinateur selon l'une quelconque revendication précédente, dans lequel l'entraînement du modèle T2V adapté au mouvement à l'aide de la ou des vidéos sans mouvement comprend la modification d'une ou de plusieurs valeurs de paramètres du ou des blocs d'adaptation de mouvement tout en maintenant fixes toutes les autres valeurs de paramètres du modèle T2V adapté au mouvement.

7. Procédé mis en œuvre par ordinateur selon l'une quelconque revendication précédente, dans lequel l'entraînement, par le système informatique, du modèle T2V adapté au mouvement et à l'espace à l'aide de la ou des vidéos de mouvement naturel et de la ou des vidéos personnalisées sans mouvement comprend la modification d'une ou de plusieurs valeurs de paramètres du ou des blocs d'adaptation spatiale tout en maintenant fixes toutes les autres valeurs de paramètres.

8. Procédé mis en œuvre par ordinateur selon l'une quelconque revendication précédente, dans lequel le procédé comprend en outre :
la génération, par le système informatique, de la ou des vidéos naturelles sans mouvement, dans lequel la génération, par le système informatique, de chacune de la ou des vidéos naturelles sans mouvement comprend :
la sélection aléatoire, par le système informatique, d'une trame d'image à partir de l'une de la ou des vidéos de mouvement naturel ; et
la duplication, par le système informatique, de la trame d'image afin de générer l'une des vidéos naturelles sans mouvement.

9. Procédé mis en œuvre par ordinateur selon l'une quelconque revendication précédente, dans lequel le ou les blocs d'adaptation spatiale comprennent des connexions résiduelles entre l'ensemble de pondérations T2I personnalisées et l'ensemble de pondérations temporelles T2V.

10. Procédé mis en œuvre par ordinateur selon l'une quelconque revendication précédente, dans lequel le procédé comprend en outre :
la génération, par le système informatique, de la ou des vidéos personnalisées sans mouvement, dans lequel la génération, par le système informatique, de chacune de la ou des vidéos personnalisées sans mouvement comprend :
la réalisation, par le système informatique, de la génération d'images à l'aide du modèle T2I personnalisé pour générer une trame d'image personnalisée ; et
la duplication, par le système informatique, de la trame d'image personnalisée pour générer l'une de la ou des vidéos personnalisées sans mouvement.

11. Procédé mis en œuvre par ordinateur selon l'une quelconque revendication précédente, dans lequel le modèle T2V a été généré par gonflement temporel d'un modèle T2I préentraîné de base, et dans lequel le modèle T2I personnalisé a été généré par réglage fin du modèle T2I préentraîné de base.

12. Procédé mis en œuvre par ordinateur selon l'une quelconque revendication précédente, dans lequel le modèle T2V et le modèle T2I personnalisé comprennent chacun des modèles de diffusion de débruitage.

13. Système informatique, comprenant un ou plusieurs processeurs et un ou plusieurs supports non transitoires lisibles par ordinateur qui stockent collectivement :
un modèle texte-vidéo (T2V) personnalisé qui a été préalablement entraîné par la réalisation d'opérations d'entraînement, les opérations d'entraînement comprenant :
l'obtention d'un modèle T2V de base et d'un modèle texte-image (T2I) personnalisé, dans lequel le modèle T2V de base comprend un ensemble de pondérations T2I de base et un ensemble de pondérations temporelles T2V, et dans lequel le modèle T2I personnalisé comprend un ensemble de pondérations T2I personnalisées ;
la modification du modèle T2V de base pour inclure un ou plusieurs blocs d'adaptation de mouvement afin d'obtenir un modèle T2V adapté au mouvement ;
l'entraînement du modèle T2V adapté au mouvement à l'aide d'une ou de plusieurs vidéos naturelles sans mouvement, dans lequel l'entraînement du modèle T2V adapté au mouvement à l'aide de la ou des vidéos naturelles sans mouvement comprend la modification d'une ou de plusieurs valeurs de paramètres du ou des blocs d'adaptation de mouvement ;
la modification du modèle T2V adapté au mouvement pour obtenir un modèle T2V adapté au mouvement et à l'espace, dans lequel la modification du modèle T2V adapté au mouvement comprend :
le remplacement de l'ensemble de pondérations T2I de base par l'ensemble de pondérations T2I personnalisées ; et
l'ajout d'un ou de plusieurs blocs d'adaptation spatiale ; et
l'entraînement du modèle T2V adapté au mouvement et à l'espace à l'aide d'une ou de plusieurs vidéos de mouvement naturel et d'une ou de plusieurs vidéos personnalisées sans mouvement générées à partir de sorties d'images générées par le modèle T2I personnalisé, dans lequel l'entraînement du modèle T2V adapté au mouvement et à l'espace aboutit au modèle T2V personnalisé ; et
des instructions exécutables par ordinateur qui, lorsqu'elles sont exécutées par un ordinateur, réalisent des opérations d'inférence, les opérations d'inférence comprenant :
la réception d'une invite textuelle ; et
le traitement de l'invite textuelle à l'aide du modèle T2V personnalisé pour générer une sortie vidéo.

14. Système informatique selon la revendication 13, dans lequel les opérations d'inférence comprennent en outre :
la réception d'une valeur pour un hyperparamètre alpha ; et
la fourniture de la valeur pour l'hyperparamètre alpha en tant qu'entrée de commande pour le modèle T2V personnalisé.

15. Système informatique selon la revendication 14, dans lequel la valeur pour l'hyperparamètre alpha comprend une valeur négative.
